# EUROPEAN PATENT APPLICATION

(11) **EP 1 394 729 A1**
(43) Date of publication of application: **03.03.2004**
(21) Application number: 03015577.4
(22) Date of filing: 11.07.2003
(51) Int. Cl.: G06K 13/08, G07F 19/00

(54) **Transaction apparatus comprising a transparent insertion slot**

(30) Priority: 30.08.2002 JP 2002253142
(71) Applicant: Omron Corporation, Kyoto-shi, Kyoto 600-8530 (JP)
(72) Inventor: Moriya, Seiji, Shan-do-fururu 305,, Osaka-shi, Osaka 533-0021 (JP)
(74) Representative: Käck, Jürgen

(57) **Abstract**

A recording medium reading device is disclosed, which enables visually confirming a contrivance made on a card throwing-in portion (4a) and a transaction apparatus, to effectively prevent a dishonest act, and to heighten an effect of suppressing a dishonest act to enhance safety in use of a recording medium (8). In the recording medium reading device (4) comprising a throwing-in portion (4a), into which a recording medium (8) is thrown, conveyance means for conveying the recording medium inside, reading means for reading information recorded on the recording medium (8), and control means for controlling these elements, at least a portion of the throwing-in portion (4a) is made of a seeing-through enabling member, through which a recording medium (8) thrown into the throwing-in portion (4a) can be visually confirmed from outside.

## Description

### BACKGROUND OF THE INVENTION

### 1. Field of the Invention

The present invention relates to a recording medium reading device for reading a data recorded on a recording medium, for example, a magnetic card, IC card, or the like, and a transaction apparatus, such as ATM, CD, and a ticket machine, provided with the recording medium reading device.

### 2. Description of Related

With conventional recording medium reading devices, such as card reader or the like, for reading a magnetic card, a possibility is conceivable that a magnetic card is dishonestly acquired, or information recorded on a magnetic card is dishonestly acquired by a dishonest act, in which the following contrivances are made.

One of such dishonest acts is that a contrivance is made, in which a sheet-shaped member is made use of to cause a magnetic card to be plugged in a card throwing-in portion, and a user throws a magnetic card in without knowing it, which magnetic card is plugged and dishonestly acquired after the user leaves. Such dishonest act comprises sticking the sheet-shaped member to a bottom surface of a card conveyance passage on the card throwing-in portion, and pulling out the magnetic card together with the sheet-shaped member after the magnetic card has been plugged, thus enabling dishonestly acquiring the magnetic card.

As a card reader for prevention of such dishonest act, there has been proposed "a card reader comprising a shutter plate provided on a card insertion port to open and close the card insertion port, the shutter plate being moved from a closed position to an opened position upon insertion of a card to permit the card to be inserted inside, and a second shutter plate provided in addition to the shutter plate, the second shutter plate being moved from a closed position to an opened position in a direction opposed to a direction, in which the shutter plate is moved from a closed position to an opened position" (see Patent document 1).

With this prior example, the two shutter plates are operatively closed in opposite directions, so that even when the sheet-shaped member is stuck to a bottom surface of a card conveyance passage, the sheet-shaped member plugs the card conveyance passage after the closing motion. Therefore, a magnetic card cannot enter inside from the card insertion port and plugs the port, so that a user can carry a magnetic card, which plugs in the course of insertion, back, thus preventing dishonest acquisition of the magnetic card.

Another dishonest act is that a contrivance is made to mount a faked card throwing-in portion to the card throwing-in portion and a magnetic data of a magnetic card as thrown in is dishonestly acquired.

As an apparatus for prevention of such dishonest act, there has been proposed "a magnetic card transaction apparatus comprising a card slot for insertion of a magnetic card, card conveyance means for taking in a magnetic card inserted from the card slot, and temporary stoppage means for temporarily stopping the taking-in action of the magnetic card by the card conveyance means when a rear end of the magnetic card protrudes outside from the card slot" (see Patent document 2).

Thereby, only a part of information recorded on a magnetic card can be read in the faked card throwing-in portion, so that it is possible to prevent an act, in which information of the magnetic card is dishonestly acquired.

As a further apparatus for prevention of such dishonest act, there has been also proposed "a magnetic card transaction apparatus comprising an apparatus casing formed with an opening for a magnetic card insertion/discharge, and amagnetic card reader arranged in the apparatus casing, the magnetic card reader comprising a card slot for insertion/discharge of a magnetic card, card conveyance means for taking a magnetic card, which is inserted from the card slot, inside and discharging the magnetic card outside through the card slot, and a magnetic head for reproducing a data from the magnetic card taking inside, and wherein a portion surrounding the card slot is at least partially formed with a projection, which protrudes in a magnetic card discharge direction" (see Patent document 3).

With this magnetic card transaction apparatus, the projection protruding in the magnetic card discharge direction prevents dishonest acquisition of information recorded on a magnetic card.
[Patent document 1]
   JP-A-2000-099637
[Patent document 2]
   JP-A-2001-022894
[Patent document 3]
   JP-A-2001-067514

With the card reader shown in Patent document 1, however, the use of a threadlike member in place of the sheet-shaped member enables dishonest acquisition by conveying a magnetic card inside to plug the same and pulling out the magnetic card together with the threadlike member.

Also, with magnetic card transaction apparatus shown in Patent documents 2 and 3, information recorded on a magnetic card can be dishonestly acquired by elaborately fabricating an imitation of a card throwing-in portion (an apparatus casing formed with an opening for a magnetic card insertion/discharge port, and a card slot).

### SUMMARY OF THE INVENTION

The invention provides a recording medium reading device comprising a throwing-in portion, into which a recording medium is thrown, conveyance means for conveying the recording medium inside, reading means for reading information recorded on the recording medium, and control means for controlling these elements, and wherein at least a portion of the throwing-in portion is made of a seeing-through enabling member, through which a recording medium thrown into the throwing-in portion can be visually confirmed from outside.

According to a preferred embodiment, the recording medium comprises a medium, such as a magnetic card and/or an IC card, capable of recording information thereon.

According to a preferred embodiment, the throwing-in portion comprises a slot neighboring portion, into which the recording medium is thrown, and comprises a portion toward a side of a slot from an opening/closing shutter in the case where the opening/closing shutter is provided to control approval or denial of throwing-in of the recording medium.

According to a preferred embodiment, the conveyance means comprises conveyance rollers and/or a conveyance belt for taking the recording medium into a casing, and a motor for rotating and driving the rollers and/or the conveyance belt.

According to a preferred embodiment, the reading means comprises a magnetic head for reading information recorded on a magnetic recording medium such as a magnetic card or the like, and/or a contact IC contact and/or a non-contact antenna for reading information recorded on an IC recording medium such as an IC card or the like.

According to a preferred embodiment, the control means comprises a control device such as CPU, MPU, or the like, the control device comprising ROM, RAM, EEPROM, or plural ones thereof.

The recording medium reading device comprises a magnetic card reader (magnetic card reader/writer) capable of magnetically reading information recorded on magnetic stripes of a magnetic card, a contact IC card reader (contact IC card reader/writer) capable of contacting with an IC chip to read information recorded on an IC card, a non-contact IC card reader (non-contact IC card reader/writer) capable of having communication with an IC chip in a non-contact state to read information recorded on an IC card, and a hybrid card reader (hybrid card reader/writer) capable of reading information recorded on a magnetic card, an IC card, or two or all of hybrid cards provided with magnetic stripes and an IC chip.

According to a preferred embodiment, the seeing-through enabling member is formed from a transparent member such as acrylic, plastic, glass, or the like, or a lattice-shaped member formed by braiding rod-shaped members lengthwise and crosswise or in one direction (lengthwise or crosswise) with spaces therebetween, or a mesh-shaped member. Also, while transparency of the transparent material suffices to enable visually confirming a recording medium in a throwing-in portion, and comprises a translucent member, the transparent member is desirably formed from a clear, transparent member of high transparency to provide for good seeing.

According to a preferred embodiment, a part of the throwing-in portion formed from the seeing-through enabling member constitutes a part on a side of the slot, and preferably a portion, by which a magnetic medium in the throwing-in portion can be visually confirmed in a direction obliquely intersecting a throwing-in direction of the recording medium. In addition, it suffices that a part of the throwing-in portion be formed from a seeing-through enabling member, and the whole throwing-in portion or the whole recording medium reading device may be formed from a seeing-through enabling member.

According to a preferred embodiment, a shutter is provided between the throwing-in portion and the body, and a part of the throwing-in portion formed from the seeing-through enabling member can be formed from a portion (one surface) of an outer package this side of the shutter and/or a portion (one surface) of a conveyance passage corresponding thereto.

According to a preferred embodiment, the shutter comprises a metallic plate, opening and closing of which is controlled by a solenoid.

According to a preferred embodiment, the portion (one surface) is disposed in an upper area in the case where a magnetic medium is horizontally thrown in, and disposed in a right or left area in the case where a magnetic medium is vertically thrown in.

Also, the invention provides a transaction apparatus comprising the recording medium reading device, input means for accepting input by a user, and control means for controlling these elements to execute a transaction processing.

According to a preferred embodiment, the input means comprises an input device, such as a touch panel for accepting a predetermined input, ten keys for accepting an input of a numeral, or the like, to accept input by a user.

According to a preferred embodiment, the control means comprises a control device such as CPU, MPU, or the like, the control device comprising ROM, RAM, EEPROM, or plural ones thereof.

According to a preferred embodiment, the transaction processing comprises a processing related to transactions, such as a bank transfer processing, a deposit processing, a pull down processing, a payment processing with a credit card, or the like.

According to a preferred embodiment, the transaction apparatus comprises an apparatus, such as an ATM, CD, credit card dispenser, ticket machine, or the like, for executing a transaction processing making use of a recording medium.

In a preferred embodiment, the recording medium reading device is housed in a casing, and a portion of the casing in the vicinity of the recording medium reading device can be formed from a seeing-through enabling member.

The portion of the casing in the vicinity of the recording medium reading device is formed from a portion of a front panel a guidance panel provided on the casing in the vicinity of the throwing-in portion of the recording medium reading device.

According to the invention, a portion of the throwing-in portion affords seeing through to enable visual confirmation of a manner, in which a recording medium is thrown in.

And it is possible to immediately find a contrivance made on the card throwing-in portion through visually confirmation.

### BRIEF DESCRIPTION OF THE DRAWINGS

Fig. 1 is a perspective view showing an outside appearance of an ATM.
Figs. 2A and 2B are views illustrating outside appearances of a plan surface and a side surface of a card reader.
Fig. 3C to 3F are views illustrating a taking-out and putting-in port neighboring portion of the card reader.
Fig. 4 is a side, cross sectional view showing constituents of the card reader.
Fig . 5G and 5H are views illustrating a neighborhood of a card taking-out and putting-in port.
Fig. 6J and 6K are views illustrating sides of other embodiments.

### DESCRIPTION OF PREFERRED EMBODIMENTS

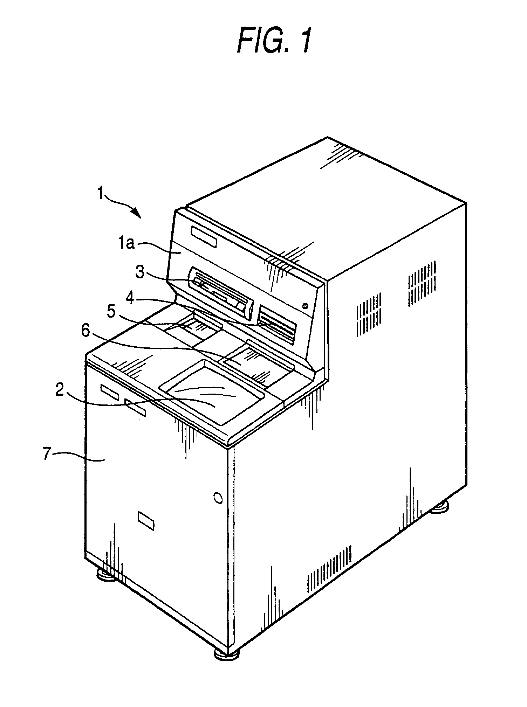

An embodiment of the invention together with the drawings will be described below. First, an outline of an ATM 1 together with a perspective view of the ATM 1 shown in Fig. 1 will be described.

The ATM 1 is installed in a financial institution such as banks, or the like, and comprises on a front surface of an upper portion thereof a touch monitor 2 serving as a monitor for displaying and showing an operation of transaction to a customer and as a touch panel for permitting input, a banknote taking-out and putting-in port 3, a card taking-out and putting-in port 4a, into which a cash card 8 being a magnetic card is inserted, a coin input-output port 5, and a note input-output port 6, and further comprises therein a control device (omitted from illustration), thus permitting transactions such as deposit, withdrawal, transfer, banknote register, balance inquiry, or the like.

In addition, the substantially vertical front surface provided with the banknote taking-out and putting-in port 3 and the card taking-out and putting-in port 4a constitutes a front surface panel 1a and is made of an opaque resin material.

When the ATM 1 is handled and operated, guidance information of various transactions such as input guidance, procedure of operation, receipt guidance, or the like, by item of transaction is displayed on the touch monitor 2, based on which a customer performs an input operation (touch input).

Provided on a lower portion of the front surface of the ATM 1 is a single swing door 7 , opening and closing of which are operated by a clerk in charge to afford inspection of an interior, and through which coins and notes are freely taken out and put in as a whole.

Making use of the ATM 1 constituted in the above manner, a user can insert a cash card 8 into the card taking-out and putting-in port 4a to perform transactions such as deposit, withdrawal, transfer, banknote register, balance inquiry, or the like.

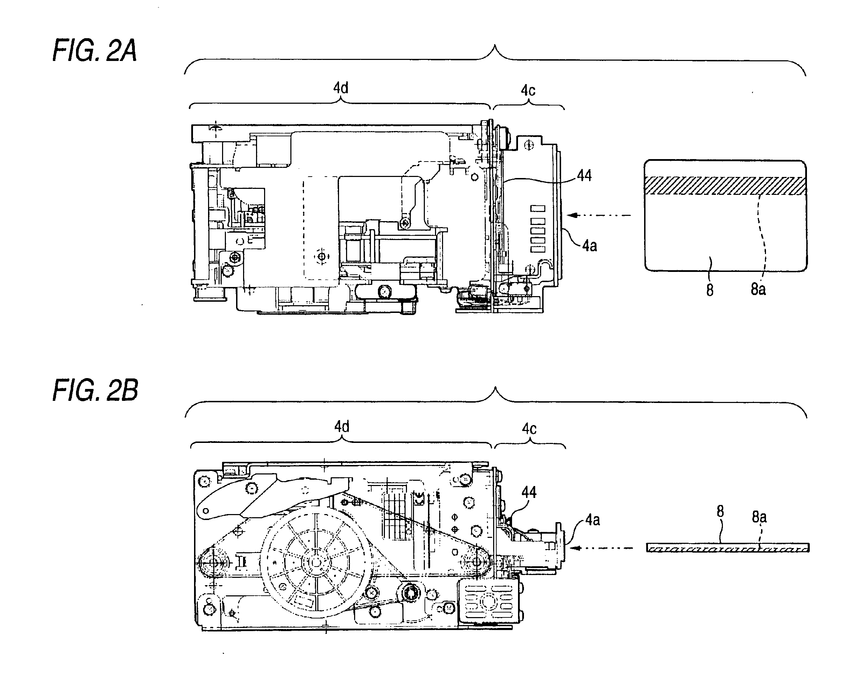

Subsequently, an external appearance and an outer package of a card reader (card reader/writer) 4 provided with the card taking-out and putting-in port 4a will be described with reference to a plan view (Fig. 2A) and a side view (Fig. 2B) and an illustration of a taking-out and putting-in port neighboring portion 4c shown in Figs . 3C to 3F.

The card reader 4 comprises a body 4d and the taking-out and putting-in port neighboring portion (slot neighboring portion) 4c as shown in the plan view (Fig. 2A) and the side view (Fig. 2B).

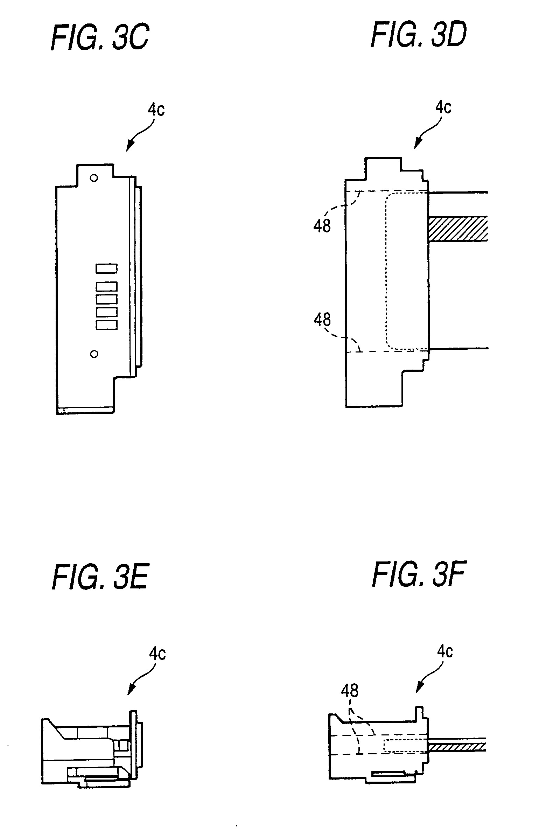

As shown in plan views of Figs. 3C and 3D and side views of Figs. 3E and 3F, the taking-out and putting-in port neighboring portion 4c comprises a portion protruding from the body 4d (see Figs. 2A and 2B) and is made of a transparent acrylic resin.

Accordingly, a cash card 8 provided on a back surface thereof with magnetic stripes 8a is inserted, as shown in Figs. 2A and 2B, by a user into the card taking-out and putting-in port 4a mounted on a right side of the taking-out and putting-in port neighboring portion 4c in the figure, the cash card 8 is seen through as shown in Figs. 3D and 3F and so it is possible to confirm a manner, in which the inserted cash card 8 is taken in. In addition, the card taking-out and putting-in port 4a permits the cash card 8 to be inserted thereinto and to be discharged when a transaction is terminated.

Provided on the taking-out and putting-in port neighboring portion 4c in the vicinity of the body 4d as shown in Figs. 2A and 2B is an opaque shutter plate 44 made of a metallic material, which plate controls approval or denial of insertion of the cash card 8.

As described above, since the taking-out and putting-in port neighboring portion 4c is made transparent, presence and absence of a suspicious stuff can be confirmed by seeing the taking-out and putting-in port neighboring portion 4c disposed near at hand from obliquely upward when a user is going to insert a cash card 8.

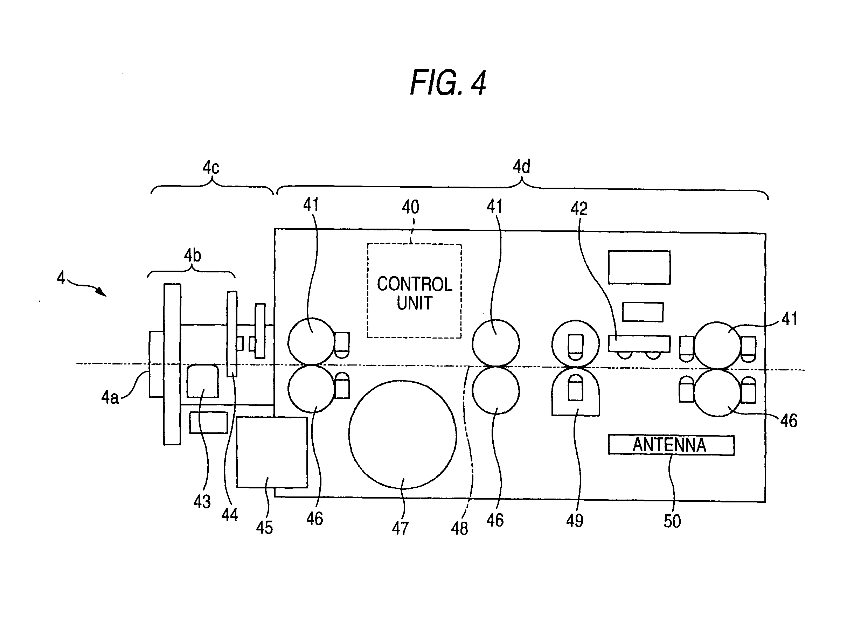

Subsequently, outlines of respective constituents of the card reader 4 together with a side, cross sectional view of the card reader 4 shown in Fig. 4 will be described.

The card reader 4 houses therein a control unit 40 to perform a reading processing of a magnetic data on a cash card 8, which is provided on a back surface thereof with magnetic stripes 8a to be able to magnetically record a data (information), through control by the control unit 40. In addition, the card reader 4 is capable of data processing (reading processing and writing processing) on not only a magnetic card but also a contact type IC card, a non-contact type IC card, and a composite card, which is provided with magnetic stripes and an IC chip, for higher flexibility, and in this embodiment, the reading function of magnetic data is made use of for the ATM 1.

A conveyance passage 48 is connected to an interior of the card taking-out and putting-in port 4a, and a plurality of pairs of conveyance means with pressing rollers 41 and drive rollers 46 facing each other are arranged on the conveyance passage 48. The drive rollers 46 are reciprocally controlled by a DC motor 47 whereby the conveyance means performs taking-in conveyance and discharge conveyance of a cash card 8.

Provided on the conveyance passage 48 in the vicinity of the card taking-out and putting-in port 4a is a throwing-in detection sensor (magnetic sensor) 43 for detecting throwing-in of a cash card 8. Thereby, a region extending from the shutter plate 44, which controls approval or denial of insertion of the cash card 8 , to the card taking-out and putting-in port 4a functions as a card insertion sensing portion (recording medium insertion sensing portion) 4b.

Also, the shutter plate 44 is provided inside the throwing-in detection sensor 43, and a solenoid 45 for controlling opening and closing of the shutter plate 44 is provided in a position below the shutter plate 44. When the throwing-in detection sensor 43 detects throwing-in of a cash card 8, the solenoid 45 lifts the shutter plate 44 in accordance with control of the control unit 40 to open the conveyance passage 48. At this time, the control unit 40 drives the DC motor 47 in a taking-in direction to take in the cash card 8.

Further, a magnetic head 49 and an IC contact 42 are arranged on the conveyance passage 48 on a back side (right side in the figure) , and an antenna 50 is provided in the vicinity of the conveyance passage 48 on the back side.

Here, the magnetic head 49 executes a reading processing of a data on the cash card 8.

Also, the IC contact 42 causes a slider to contact with a contact of an IC chip of a contact type IC card to enable executing a data processing on the contact type IC card.

Also, the antenna 50 can execute a data processing on a non-contact type IC card or a composite card.

The control unit 40 executes driving and controlling of the DC motor 47, which conveys a cash card 8 on the conveyance passage 48 in the manner described above, in addition to executing the reading processing and writing processing on various cash cards 8 described above.

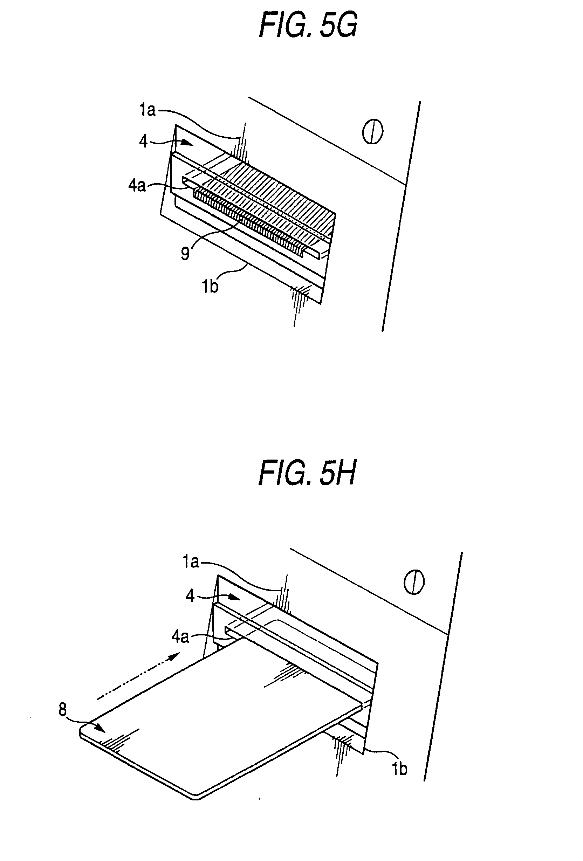

The constitution and construction described above make it possible to definitely visualize and confirm mounting of a suspicious stuff as shown in Fig. 5G of an illustration in the vicinity of the card taking-out and putting-in port 4a even when a sheet 9 for dishonest acquisition of a card is applied on the card reader 4 mounted on a card reader mount window 1b formed on the front panel 1a.

Thereby, personnel, watchmen, or the like in a bank can approach the ATM 1 to elaborately confirm, or remotely confirm whether a suspicious stuff is mounted at the card taking-out and putting-in port 4a, so that it is possible to maintain a state, in which a contrivance for dishonest acquisition of a cash card 8 and dishonest reading of a magnetic data is absent, thus improving the security.

Also, since even a manner, in which a cash card 8 is inserted, can be visualized and confirmed as shown in Fig. 5H, the cause for plugging can be visually confirmed with ease even in the case where the cash card 8 is plugged this side of the shutter plate 44, so that it is possible to quickly perform maintenance for elimination of plugging. Thereby, time, during which a user must wait at the time of trouble, is reduced, thus enabling enhancing a user's satisfaction.

Besides, since a user oneself can visually confirm presence of a suspicious stuff when the user inserts a cash card 8, a safe use can be provided.

Further, since the shutter plate 44 is made of an opaque metallic plate, it is possible to maintain secrecy of an internal construction of the body 4d for data reading while keeping visuality for catching a dishonest act.

In addition, illumination means, such as LED, fluorescent lamp, incandescent lamp, or the like, which emits light simultaneously with detection of insertion of a cash card 8, may be provided inside the taking-out and putting-in port neighboring portion 4c. Thereby, the taking-out and putting-in port neighboring portion 4c is illuminated brightly, thus enabling easily finding out presence of a suspicious stuff.

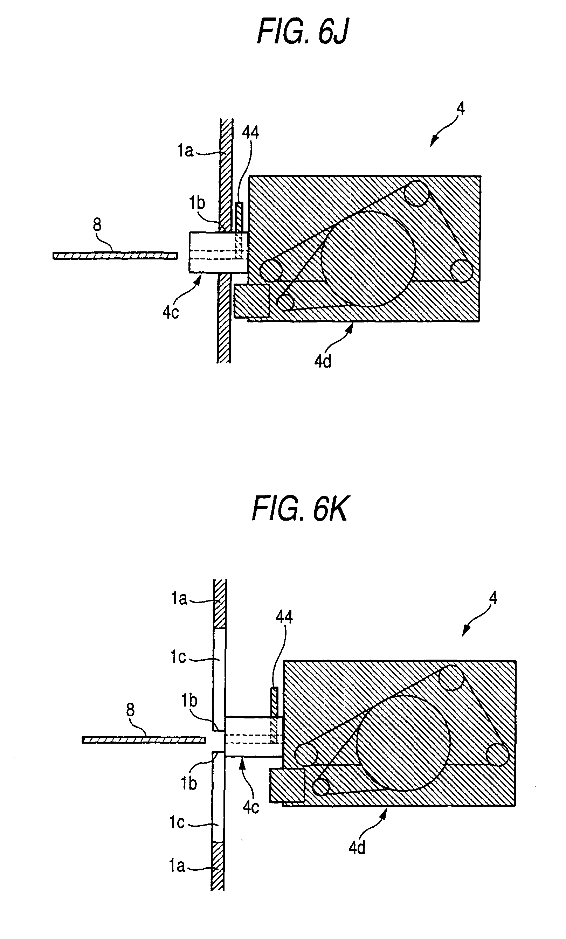

Also, while the above embodiment is configured such that the card taking-out and putting-in port 4a of the card reader 4 is just fitted into the card reader mount window 1b of the front panel 1a of the ATM 1, a portion of a taking-out and putting-in port neighboring portion 4c may be provided to protrude from the card reader mount window 1b of the front panel 1a of the ATM 1 as shown in a side view of Fig. 6J. Thereby, whether a contrivance for a dishonest act is made on the taking-out and putting-in port neighboring portion 4c of the card reader 4 can be visually confirmed in a wide range of angle.

Also, as shown in a side view of Fig. 6K, a card reader mount window 1b on the front panel 1a of the ATM 1 may be formed to be laterally lengthy and a taking-out and putting-in port neighboring portion 4c of the card reader 4 may be provided to be disposed fully inside a card reader mount window 1b so that only the card reader mount window 1b externally appears to be present on the front panel 1a.

In this case, a transparent panel 1c made of a transparent member (for example, a transparent acrylic resin, or the like) is provided in the vicinity of the card reader mount window 1b to enable visualizing an interior of the taking-out and putting-in port neighboring portion 4c. Thereby, it is possible to improve the security function and the beautiful view in outside appearance.

Also, the insertion port (slot) and the discharge port for a cash card 8 may be provided separately. In this case, it suffices that an insertion port neighboring portion be made of a transparent material.

Also, provided that the card insertion sensing portion 4b (Fig. 4) is transparent, that portion of the taking-out and putting-in port neighboring portion 4c, which extends from the shutter plate 44 to the body 4d may be made of an opaque member. In the case where the card insertion sensing portion 4b is transparent, a contrivance for a dishonest act can be visually confirmed whereby it is possible to obtain a necessary and sufficient security function.

Also, that portion of the taking-out and putting-in port neighboring portion 4c made of a transparent material, which is disposed below the conveyance passage 48, may be formed of an opaque material. In order to prevent a contrivance for a dishonest act, it suffices to enable confirming the taking-in operation of a cash card 8, and even in the case where a bottom of the conveyance passage 48 or the like, which cannot be seen by the cash card 8, is not transparent, it is possible to exhibit a preventive function for a dishonest act.

Also, that portion of the transparent panel 1c, which is disposed below the taking-out and putting-in port neighboring portion 4c, may be made of an opaque material. In this case, presence and absence of a suspicious stuff can also be easily confirmed without strain by obliquely overlooking a position (position of the taking-out and putting-in port neighboring portion 4c) at hand from a position of ordinary person's eyes.

Also, a bottom surface of the conveyance passage 48 within the taking-out and putting-in port neighboring portion 4c (or within the card insertion sensing portion 4b) may be formed by that surface, on which a pattern such as a transverse striped pattern of yellow and black, a checked pattern or the like, and characters are printed. Thereby, it becomes difficult to create that article for a dishonest act, which is the same in pattern and neutral, and even when such article is created, mounting thereof without discrepancy is difficult and so it is possible to easily find an article for a dishonest act.

Also, the shutter plate 44 and/or the body 4d may be made of a transparent material. In this case, it becomes possible to visually confirm a position on a further back side, and so it becomes possible to prevent a dishonest act, in which a contrivance is made on a back side of the card reader 4.

Also, the DC motor 47 may be a reversible pulse motor.

In the corresponding relationship between the constitution of the invention and the embodiments, the transaction apparatus according to the invention corresponds to the ATM 1 in the embodiments, and the same applies correspondingly to the following. A neighboring portion of a recording medium reading device corresponds to the transparent panel 1c, input means corresponds to the touch monitor 2, a recording medium reading device corresponds to the card reader 4, a slot portion corresponds to the taking-out and putting-in port neighboring portion 4c, a recording medium corresponds to the cash card 8, control means of a recording medium reading device corresponds to the control unit 40, reading means corresponds to the IC contact 42, magnetic head 49 and the antenna 50, conveyance means corresponds to the DC motor 47, a seeing-through enabling member corresponds to the transparent member, and control means of the transaction apparatus corresponds to the control device. However, the invention is not limited only to the constitution of the above embodiments but many embodiments can be obtained.

## Claims

1. A recording medium reading device comprising a throwing-in portion, into which a recording medium is thrown, conveyance means for conveying the recording medium inside, reading means for reading information recorded on the recording medium, and control means for controlling these elements, and wherein at least a portion of the throwing-in portion is made of a seeing-through enabling member, through which a recording medium thrown into the throwing-in portion can be visually confirmed from outside.

2. A transaction apparatus comprising the recording medium reading device according to claim 1, input means for accepting input by a user, and control means for controlling these elements to execute a transaction processing.

3. The transaction apparatus according to claim 2, wherein the recording medium reading device is provided to be housed in a casing, and a portion of the casing neighboring the recording medium reading device is made of a seeing-through enabling member.
